# EUROPEAN PATENT SPECIFICATION

(11) **EP 2 177 799 B1**
(45) Date of publication and mention of the grant of the patent: **26.02.2014**
(21) Application number: 09252442.0
(22) Date of filing: 19.10.2009
(51) Int. Cl.: F16K 17/16, F16K 37/00

(54) **Pressure surge sensor and assembly including such a sensor and a rupture disc**
Druckwellensensor und Anordnung mit solch einem Sensor und Berstscheibe
Capteur de pic de pression et ensemble doté d'un tel capteur et d'un disque de rupture

(30) Priority: 17.10.2008 GB 0819104
(43) Date of publication of application: 21.04.2010
(73) Proprietor: Elfab Limited, Tyne and Wear NE29 8SD (GB)
(72) Inventor: Widdas, Christopher John, North Shields Tyne & Wear NE29 8SD (GB)
(74) Representative: Paget, Hugh Charles Edward

(56) References cited:
- WO-A-2005/054731
- WO-A-2007/076750
- US-A- 3 626 474
- US-A- 3 651 827

## Description

### FIELD OF THE INVENTION

This invention relates to a pressure surge sensor, which is particularly suitable for use with a pressure relief rupture disc. The invention also relates to an assembly comprising a pressure surge sensor and a pressure relief rupture disc.

### BACKGROUND TO THE INVENTION AND PRIOR ART

Rupture discs, also commonly known as bursting discs, are well known safety pressure relief devices, which are designed to rupture reliably at a predetermined pressure differential (rupture/burst strength).

It is well known in the many industries to provide such rupture discs for protecting pressure systems from overpressurisation. One such rupture disc is for example disclosed in WO 03/031853. When the pressure at one side of the disc rises above a predetermined rupture strength, the disc ruptures thereby releasing pressure from the system. Typical applications are on reaction vessels and chambers, in the chemical, pharmaceutical and food industries.

Another application is to provide a warning detection system in an extrusion apparatus or gas handling or gas storage system, to give a warning of over-pressure.

It is also known in the art to provide a rupture disc with a rupture detector. WO 2005/054731 discloses a rupture disc type over-pressure detector having a rupture disc clamped at its flange between inlet and outlet pipe members. At the vent side of the device is mounted a magnet, its movement being sensed by a non-invasive sensor. When the pressure at one side of the disc rises above a predetermined rupture strength, the disc ruptures, thereby releasing pressure from the system and moving the magnet relative to the sensor. A signal is produced by the sensor, signalling that the rupture disc has ruptured.

Pressure indicator and relief devices are also known from the documents US 3626474 and US 3651827.

### SUMMARY OF THE INVNETION

An object of the present invention is to provide an improved pressure surge detector, particularly a detector for use in combination with a rupture disc. A pressure surge detector, which provides an output signal when subjected to a pressure surge, must act reliably and quickly, when provided at the outlet side of a rupture disc. Particularly when the amount of pressurised gas released through the rupture disc, on rupture of the disc, is small, the sensor may be required to operate at relatively low pressure, for example 0.3 bar.

According to this invention there is provided a gas pressure surge sensor comprising all of the features of claim 1.

By the invention a device which is simple in construction and reliable in operation, even at low pressure, may be provided.

The sensor has a retainer restraining said piston member against movement along the cylinder from a first position in the cylinder relative to said switch, said retainer being adapted to release the piston member on application of a predetermined load to the piston member. The retainer may be a breakable element, adapted to be broken to release the piston member when said predetermined load is applied.

Preferably the piston is freely movable along the cylinder, after release by the retainer, no mechanical element applying a driving force opposing its movement.

The fluid pressure surge source is preferably a gas pressure surge source.

The body has one or more vent holes connecting said cylinder to the exterior, said vent hole or holes being located so as to be opened by the movement of the piston along the cylinder to allow release of gas pressure from the side of the piston to which the pressure surge is applied.

In a second aspect, the invention provides an assembly comprising a gas pressure surge sensor of the invention as described above and a rupture disc, the rupture disc being adapted to rupture at a predetermined rupture strength and arranged on rupturing to release a pressure surge to the pressure surge sensor.

The invention also provides a gas handling or gas storage apparatus, having such an assembly.

### INTRODUCTION OF THE DRAWINGS

Non-limitative embodiments of the invention will now be described by way of example with reference to the accompanying drawings. In the drawings:
Fig.1 is an isometric view of a first pressure surge sensor embodying the invention, with the housing body of the sensor cut away, to show the interior parts.
Fig. 2 is an end view on the left hand end of the pressure surge sensor of Fig. 1.
Fig. 3 is a side view of the pressure surge sensor of Fig. 1.
Fig. 4 is an isometric view of a second pressure surge sensor embodying the invention, cut along an axial section, to show interior parts.
Fig. 5 is a diagrammatic view of an assembly embodying the invention.

### DESCRIPTION OF PREFERRED EMBODIMENTS

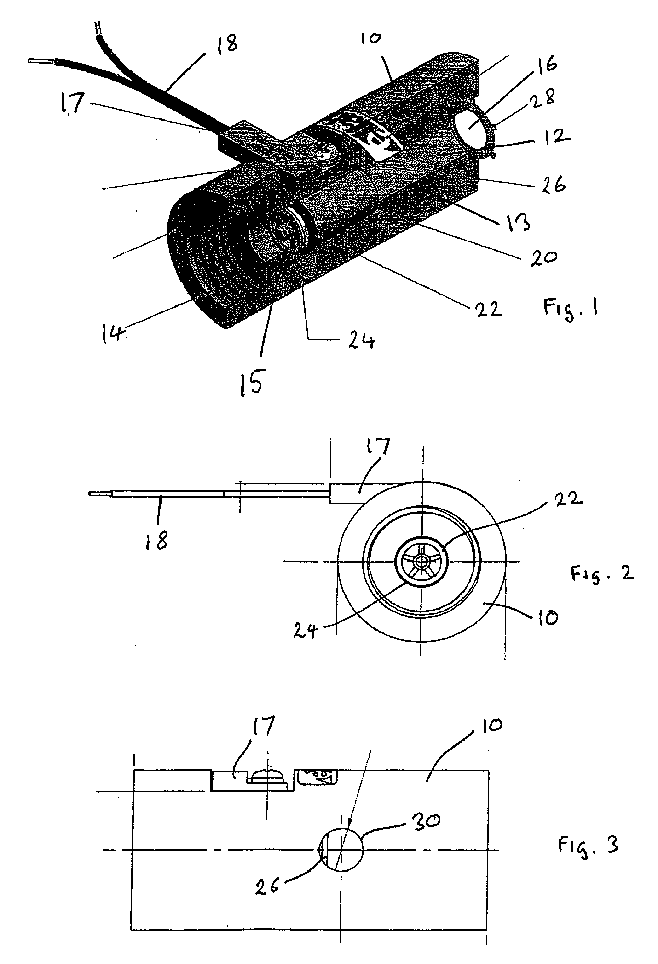

The pressure sensor embodying the invention shown in Figs. 1 to 3 has a body in the form of a housing 10, which is made in one piece of suitable synthetic resin material, in the present case of nylon 6/6. Any other suitable nonmagnetic material may be employed for this housing 10. The housing 10 has a central passage 12 which has a large screwthreaded portion 14 at one end, suitable to make connection with a complementarily threaded pipe. Apart from this large opening end 14, the central passage 12 is a circularsectioned cylindrical shape passage 13 having a step 15 and extending to an open end 16 at the opposite end of the body 10.

On the exterior of the body 10, there is mounted a magnetically actuated reed switch 17 of a standard design, containing electrical contacts which are biased towards an open position and held in the closed position when subjected to a magnetic field provided by a magnet described below. Electrical wires 18 are connected to the switch 16, so that opening and closing of the contact in the switch 16 can be detected.

In the cylindrical passage 13 of the housing 10 a piston 20 is located, also having a circular cross-section and closely fitting within the passage 13, while being movable along the passage. At the first end of the piston 20, towards the large portion 14, there is mounted a felt washer 22 which is held in place by a steel disc 24 having openings through it and attached to the piston 20. The felt washer 22 provides a better seal of the piston 20 to the surface of the passage 13. A different form of piston ring may be provided to achieve a satisfactory seal between the piston 20 and the body 10, or no additional seal may be provided.

The piston 20 is made of a suitable synthetic resin material, in this case nylon 6/6, and holds within it a permanent bar magnet (not shown).

In the position shown in Fig. 1, movement of the piston 20 to the right hand side is optionally prevented by a piston retainer 26 which is a graphite rod and is easily broken. The load required to break this retainer 26 is small.

At the extreme right hand end of the passage 13 there is a fixed steel ring 28, which is removable, and which prevents the piston 20 from being driven out of the passage 13. On removal, it allows insertion and replacement of the piston 20.

As shown in Fig. 1, the piston is held against movement towards the open end 14 by the step 15 in the passage 13.

Spaced from the right hand side of the piston in its position shown in Fig. 1, the body 10 has laterally opening vents 30 extending from the passage 13 to the exterior peripheral face of the body 10.

Operation of the pressure surge sensor shown in the drawings is as follows. The normal rest position, before actuation of the sensor, is as shown in Fig. 1. In this position, the magnet within the piston 20 holds the contacts within the switch 16 in their closed position, allowing passage of current between the two wires 18. Typically a control device of the apparatus, to which the pressure surge sensor is fitted, continuously or periodically checks that the current flows, the contacts remaining closed. The piston 20 is held in place between the piston retainer 26 and the step 15. When a gas pressure surge having a pressure sufficiently above that of the atmosphere is applied at the end 14, the piston 20 is driven to the right as shown in Fig. 1 by the pressure differential over atmospheric pressure, breaking the retainer 26 and moving along the passage 12 at least until the vents 30 are uncovered, when excess pressure in the passage 12 can escape into the atmosphere. This movement of the piston 20 changes the magnetic field applying at the switch 16, allowing the contacts within the switch 16 to open, breaking the electrical connection between the two wires 18. This is sensed by the control device of the apparatus mentioned above, so that suitable action can be taken. A warning signal may be generated and/or the apparatus may be, for example, shut down.

After breakage of the retainer 26, no mechanical element provides a driving force opposing movement of the piston 20 along the passage 12. Only friction provides resistance to movement.

When used in conjunction with a rupture disc, the pressure surge sensor is connected, via the screw threaded opening end 14, to a pipe structure in which the rupture disc is mounted. The pressure surge sensor is thus on the downstream or low pressure side of the bursting disc. When the rupture disc operates by rupture, when its bursting strength is exceeded, a pressure surge passes through the bursting disc and operates the pressure surge sensor as described above. The rupture of the rupture disc is therefore detected.

For example, when the rupture disc is arranged in an extrusion machine, e.g. on a branch pipe connected to the pressurized chamber of the extrusion machine, or when the rupture disc is arranged connected in a gas handling or storage system to detect overpressure, the rupture disc is selected so as to rupture at the desired maximum operating pressure of the machine or system. Rupture of the rupture disc when this pressure is exceeded is detected by the pressure surge sensor. Operation of the pressure surge sensor is detected by the control device of the machine, which causes the machine to cease operation.

The pressure surge sensor is simple in operation, and is reliable, since the piston is able to move when subjected to a relatively low pressure differential. The device is not integral with the rupture disc mounting, and is easily mounted to an existing structure or incorporated in a new assembly.

The contacts of the switch 16 may alternatively be held in the open position by the magnetic field of the magnet in the piston 20, but the arrangement described above is more fail-safe because accidental cutting of the wire 18 is detected. In another embodiment, the switch 16 may be mounted at a different position on the body 10, so that the magnet 20 can move past it or come to a stop close to it, when the pressure surge causes movement of the magnet.

The device can be made of components which are capable of resisting relatively high temperatures, for example 100°C.

In the drawings, the cylinder passage 12 and the piston 20 are circular in cross-section, which is most convenient, but may be of other cross-section shape.

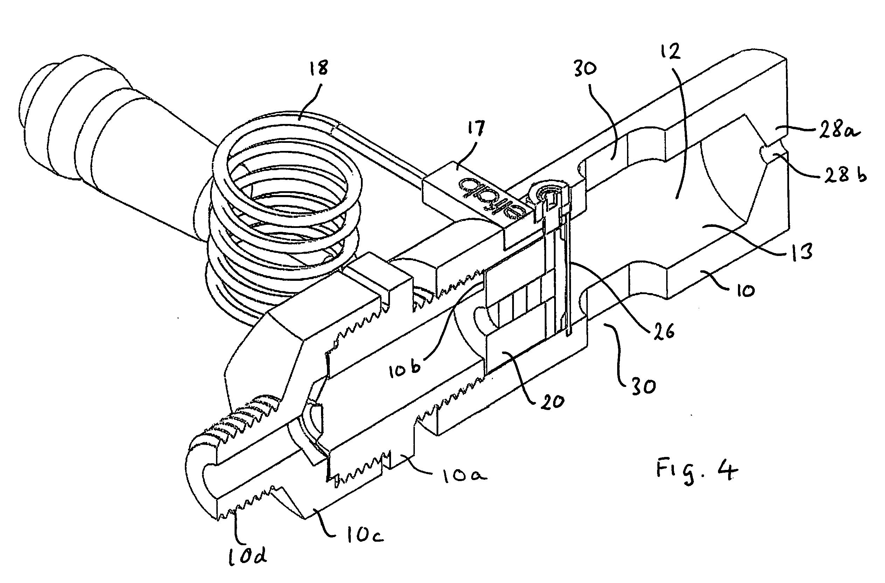

Fig. 4 shows a pressure surge sensor embodying the invention which is a modification of the sensor of Figs. 1 to 3. Similar or identical parts are identified by the same reference numbers and will not be described again. This sensor differs from that of Figs. 1 to 3 in several ways. Instead of the removable ring 29, the body 10 has an integral end 28a having a small hole 28b through it to allow air to escape. The piston 20 cannot be removed at this end of the body 10. At the left end in Fig. 4, the body 10 has a pipe portion l0a screw-threadedly engaged into the body 10 and providing an abutment face 10b which prevents the piston 20 from moving to the left from its normal rest position adjacent the optional breakable retainer 26. The pipe portion 10a has a connector 10c screw-threadedly engaged on it and having an exterior screw-thread 10d which is suitable for connection to a pipe or other vessel in which the pressure surge, to be detected, may occur. Removal of the pipe portion 10a from the body allows insertion, removal and replacement of the piston 20.

The operation of the sensor of Fig. 4 is the same as that of Figs. 1 to 3.

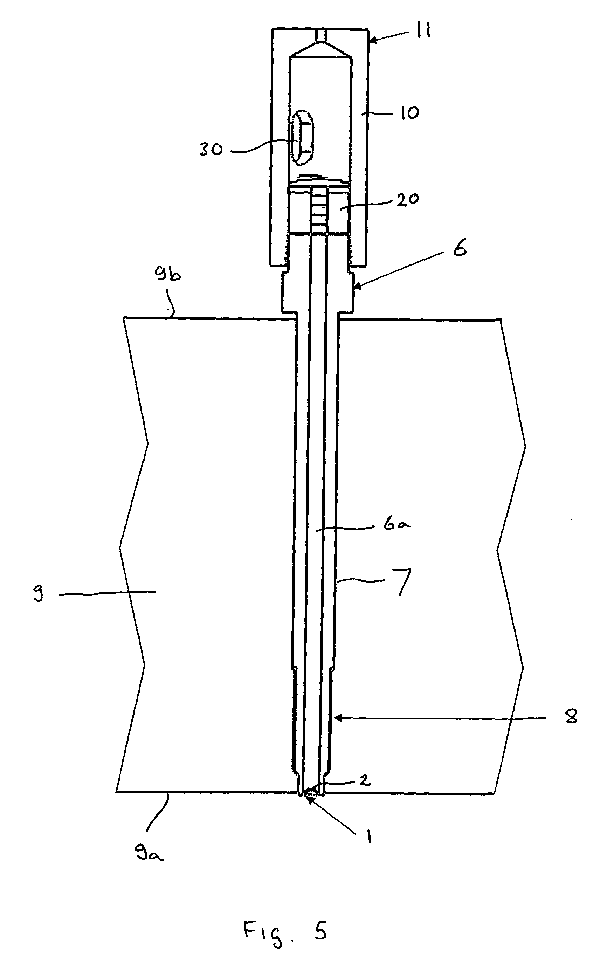

Fig. 5 shows diagrammatically an assembly of the invention, comprising the sensor of Fig. 4 indicated by reference numeral 11, a rupture disc assembly 1 and a wall of a pressurized apparatus, schematically indicated by reference numeral 9 having an internal face 9a at the highpressure side and an external face 9b. The pressurized apparatus 9 is for example a conventional extrusion apparatus, e.g. for extrusion of plastics or metal, or is a pressurized tank or other vessel of a gas handling or gas storage system.

Attached to the front end of the body 10 of the sensor 11, by a screw-thread, is a tubular member 6 replacing the elements 10a and 10c of Fig. 4. The member 6 holds the disc unit having the disc 2 at its distal end and is sealingly engaged in a bore 7 through the wall 9 by a screw-thread 8.

The rupture disc assembly 1 shown is of a known type, such as described in GB-A-2285284, WO03/031853, WO2005/054731, WO2007/036719 and EP-A-1938007. The assembly 1 has a forward-acting rupture disc unit having a rupture disc 2 adapted to rupture at a predetermined pressure at the interior of the wall 9

When excess pressure in the pressurized apparatus 9, being protected by the rupture disc assembly 1, is applied to the inlet face of the disc 2, the disc 2 ruptures, releasing a pressure surge along the central bore 6a of the member 6 to the pressure surge sensor 11, which provides an electrical output signal, which may act as a warning and/or be used for control of the apparatus 9.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting.

## Claims

1. A gas pressure surge sensor comprising a body (10) having a cylinder passage (13),
a magnetically actuated electrical switch (17) mounted on said body, and
a piston member (20) movable along said passage relative to said switch (17), the piston member comprising a magnet,
said cylinder passage (13) being adapted to be coupled to a gas pressure surge source,
whereby a gas pressure surge applied to said cylinder passage (13) causes said piston member to move along said cylinder passage relative to said switch (17), thereby actuating said switch,
wherein the body (10) has one or more vent holes (30) connecting said cylinder passage (13) to the exterior side of said body (10), said vent hole or holes (30) being located so as to be opened by the movement of the piston (20) along the cylinder passage (13) to allow release of gas pressure from the end of the piston to which the gas pressure surge is applied, so that the gas escapes laterally relative to the direction of movement of the piston in the cylinder passage into the atmosphere, and
wherein the sensor has a retainer (26) restraining said piston member (20) against movement along the cylinder passage (13) from a first position in the cylinder passage relative to said switch (17), said retainer (26) being adapted to release the piston member (20) on application of a predetermined load to the piston member.

2. A pressure surge sensor according to claim 1, wherein said retainer (26) is a breakable element, adapted to be broken to release the piston member (20) when said predetermined load is applied.

3. A pressure surge sensor according to claim 1 or 2, wherein said piston (20) is freely movable along the cylinder passage (13), after release by the retainer (26), no mechanical element applying a driving force opposing its movement.

4. An assembly comprising a gas pressure surge sensor according to any one of claims 1 to 3 and a rupture disc, the rupture disc being adapted to rupture at a predetermined rupture strength and arranged on rupturing to release a gas pressure surge to the pressure surge sensor.

5. A gas handling or gas storage system, having an assembly according to claim 4.

## Patentansprüche

1. Gasdruckwellensensor, umfassend
einen Körper (10) mit einem Zylinderdurchlass (13),
einen magnetisch betätigten Elektroschalter (17), der auf dem Körper angebracht ist, und
ein Kolbenelement (20), das entlang diesem Durchlass relativ zum Schalter (17) bewegbar ist, wobei der Kolben einen Magneten umfasst,
wobei der Zylinderdurchlass (13) angepasst ist, um mit einer Gasdruckwellenquelle verbunden zu sein.
wodurch eine auf den Zylinderdurchlass (13) beaufschlagte Gasdruckwelle das Bewegen des Kolbenelements entlang dem Zylinderdurchlass relativ zu dem Schalter (17) verursacht, wodurch der Schalter betätigt wird;
worin der Körper (10) eines oder mehrere Entlüftungslöcher (30 aufweist, die den Zylinderdurchlass (13) mit der Außenseite des Körpers (10) verbindet, wobei das oder die Entlüftungslöcher (30) so angeordnet sind, dass sie durch das Bewegen des Kolbens (20) entlang dem Zylinderdurchlass (13) geöffnet werden, um die Freisetzung des Gasdrucks vom Ende des Kolbens, der mit der Gasdruckwelle beaufschlagt wird, zu ermöglichen, sodass das Gas seitlich relativ zur Bewegungsrichtung des Kolbens im Zylinderdurchlass in die Atmosphäre entweicht, und
worin der Sensor eine Haltevorrichtung (26) aufweist, die das Kolbenelement (20) gegen die Bewegung entlang dem Zylinderdurchlass (13) von einer ersten Position im Zylinderdurchlass relativ zum Schalter (17) zurückhält, wobei die Haltevorrichtung (26) dazu geeignet ist, das Kolbenelement (20) bei Beaufschlagung einer vorbestimmten Last auf das Kolbenelement freizugeben.

2. Druckwellensensor nach Anspruch 1, worin die Haltevorrichtung (26) ein brechbares Element ist, das geeignet ist, zerbrochen zu werden, um das Kolbenelement (20) freizugeben, wenn die vorbestimmte Last beaufschlagt wird.

3. Druckwellensensor nach Anspruch 1 oder 2, worin der Kolben (20) nach Freigabe durch die Haltevorrichtung (26) entlang dem Zylinderdurchlass (13) frei bewegbar ist, wobei kein mechanisches Element, das eine treibende Kraft beaufschlagt, seine Bewegung hemmt.

4. Anordnung, umfassend einen Gasdruckwellensensor nach einem der Ansprüche 1 bis 3 und eine Berstscheibe, wobei die Berstscheibe für das Bersten bei einer vorbestimmten Berstkraft geeignet und angeordnet ist, um beim Bersten eine Gasdruckwelle an den Druckwellensensor freizugeben.

5. Gashandhabungs- oder Gaslagerungssystem mit einer Anordnung gemäß Anspruch 4.

## Revendications

1. Capteur de pic de pression de gaz, comprenant un corps (10) ayant un passage de cylindre (13),
un commutateur électrique actionné de manière magnétique (17) monté sur ledit corps, et
un élément de piston (20) déplaçable le long dudit passage relativement audit commutateur (17), l'élément de piston comprenant un aimant,
ledit passage de cylindre (13) étant apte à être couplé à une source de pic de pression du gaz,
moyennant quoi un pic de pression de gaz appliqué audit passage de cylindre (13) amène ledit élément de piston à se déplacer le long dudit passage de cylindre relativement audit commutateur (17), en actionnant ainsi ledit commutateur,
où le corps (10) possède un ou plusieurs trous d'évent (30) reliant ledit passage de cylindre (13) au côté extérieur dudit corps (10), le ou les trous d'évent précités (30) étant localisés de manière à être ouverts par le déplacement du piston (20) le long du passage de cylindre (13) pour permettre le relâchement de la pression du gaz de l'extrémité du piston à laquelle le pic de pression du gaz est appliqué de sorte que le gaz s'échappe latéralement relativement à la direction de déplacement du piston dans le passage de cylindre dans l'atmosphère, et
où le capteur présente un organe de retenue (26) retenant ledit élément de piston (20) d'effectuer un déplacement le long du passage de cylindre (13) d'une première position dans le passage de cylindre relativement audit commutateur (17), ledit organe de retenue (26) étant apte à relâcher l'élément de piston (20) lors de l'application d'une charge prédéterminée à l'élément de piston.

2. Capteur de pic de pression de gaz selon la revendication 1, dans lequel ledit organe de retenue (26) est un élément de rupture, apte à être rompu pour relâcher l'élément de piston (20) lorsque ladite charge prédéterminée est appliquée.

3. Capteur de pic de pression selon la revendication 1 ou 2, dans lequel ledit piston (20) est déplaçable librement le long du passage de cylindre (13), après le relâchement par l'organe de retenue (26), aucun élément mécanique n'appliquant une force d'entraînement s'opposant à son déplacement.

4. Ensemble comprenant un capteur de pic de pression du gaz selon l'une quelconque des revendications 1 à 3 et un disque de rupture, le disque de rupture étant apte à se rompre à une force de rupture prédéterminée et agencé lors de la rupture pour relâcher un pic de pression du gaz au capteur de pic de pression.

5. Système de manipulation du gaz ou de stockage du gaz, comportant un ensemble selon la revendication 4.
